# EUROPEAN PATENT APPLICATION

(11) **EP 4 640 525 A1**
(43) Date of publication of application: **29.10.2025**
(21) Application number: 23907615.1
(22) Date of filing: 15.12.2023
(51) Int. Cl.: B62D 21/15, B62D 25/02, B62D 25/20, B62D 27/02, B62D 27/06, B60K 1/04

(54) **ELECTRIC VEHICLE BODY STRUCTURE**

(30) Priority: 21.12.2022 KR 20220181123
(71) Applicant: POSCO Co., Ltd, Pohang-si, Gyeongsangbuk-do 37859 (KR)
(72) Inventor: LEE, Hong-Woo, Incheon 21985 (KR); LEE, Gyu-Min, Incheon 21985 (KR); KIM, Jaehyun, Incheon 21985 (KR); KIM, Hwi-Geon, Incheon 21985 (KR)
(74) Representative: Meissner Bolte Partnerschaft mbB
(86) International application number: PCT/KR2023/020735
(87) International publication number: WO 2024/136329

(57) **Abstract**

The present invention relates to an electric vehicle body structure capable of protecting a battery pack from external shock. The vehicle body structure according to one embodiment of the present invention comprises: a battery frame including a first sub frame extending in a first direction, which is the width direction of a vehicle, and a third sub frame extending in a second direction, which crosses the first direction, and connected to the first sub frame, and having, therein, a battery area, which is a battery accommodation space; a floor part coupled to the battery frame and arranged on the battery accommodation space; a battery unit extending in the first direction, and including a cross member arranged on the floor part; and a body arranged on the battery unit.

## Description

### Technical Field

The present disclosure relates to an electric vehicle body structure, and more particularly, to an electric vehicle body structure that can protect a battery pack from external impacts and an electric vehicle having the vehicle body structure.

### Background Art

In general, a vehicle having a body-on-frame structure has a vehicle body structure formed by assembling a frame forming a lower portion thereof, and a body including a passenger compartment. As a method of assembling the frame and the vehicle body, a method of assembling the same using a mounting bushing is adopted.

This method may have the advantage that can not only improve the ride comfort of passengers by preventing vibrations and impacts generated by a road surface from being directly transmitted to the vehicle body, but may also separate the production of the frame and the vehicle body to be assembled into a final vehicle state, but the coupling of the frame and the vehicle body by a mount bushing may have the problem of weak rigidity compared to the coupling by welding and mechanical joining.

In addition, since the frame and the vehicle body are separated during a collision, the collision energy absorption and deformation resistance capabilities may be reduced. When performing a collision analysis (CAE) of a vehicle with a conventional body-on-frame structure, the collision performance of a vehicle body structure exhibits results that are not bad in terms of marketability, but there may be a problem that deformation of the frame may not be completely suppressed.

In addition, in the case of an electric vehicle, unlike a conventional vehicle body structure, it is common that a battery is disposed in an internal space of the frame. When provided with a battery, a typical body-on-frame vehicle body structure would inevitably have difficulty in protecting the battery in the event of a collision without additional reinforcement.

In addition, when a frame path is configured by spreading the frame as much as possible in a width direction of the vehicle to secure a battery space and transverse members between longitudinal members are removed, it becomes more difficult to prevent deformation of the frame due to an external collision.

Therefore, there is a need for a vehicle body structure that can solve the above-described problems in an electric vehicle.

(Patent Document 1) Korean Publication No. 10-2022-0093234 (Published on July 5, 2022)

### Summary of Invention

### Technical Problem

The present disclosure is intended to solve the above-described problems, and an aspect of the present disclosure is to provide a vehicle body structure that can maximize structural rigidity by maximizing a battery space and increasing impact absorption capability and reduce the weight. In addition, an aspect of the present disclosure is to provide a modularized vehicle body structure.

### Solution to Problem

In order to achieve the above-described purpose, in the present disclosure, provided are an electric vehicle body structure and an electric vehicle formed as follows.

According to an embodiment of the present disclosure, an electric vehicle body structure includes a battery unit including a battery frame including a first subframe extending in a first direction, a width direction of a vehicle, and a third subframe extending in a second direction crossing the first direction and connected to the first subframe, and having a battery region, a battery accommodation space, formed therein, a floor part coupled to the battery frame and disposed on the battery accommodation space, and a cross member extending in the first direction and disposed on the floor part; and a body disposed on the battery unit.

According to another embodiment of the present disclosure, an electric vehicle body structure includes a battery frame having a battery region, in which a battery is mounted, defined, and located along the periphery of the battery region; and a sill side part disposed to abut the battery frame in a first direction, a width direction of a vehicle, and formed to extend in a second direction, a longitudinal direction of the vehicle.

In addition, the battery frame may be formed by coupling a plurality of subframes, wherein the subframe may include a first subframe extending in the first direction, a second subframe at least partially parallel to the first subframe, a third subframe extending in the second direction, and a fourth subframe at least partially parallel to the third subframe, which are integrally connected to form a closed cross-section, wherein the subframe may further include a floor part covering an open one surface of the battery frame.

In addition, the floor part may further include a flange formed to protrude from the battery frame in the first direction or the second direction, and at least a portion of the sill side part may abut the flange.

A cross member fixed to the floor part, located outside the battery region, and formed to extend in the first direction may be further included.

According to another embodiment of the present disclosure, an electric vehicle body structure includes a battery unit, on a plane defined by a first direction and a second direction intersecting each other, including a battery unit including a battery frame defining an internal space, a battery pack accommodated in the internal space, a floor part coupled to the battery frame, and disposed on the battery pack, and a pillar bracket installed on the floor part, and a body disposed on the battery unit, and coupled to the battery unit through the pillar bracket.

According to an embodiment of the present disclosure, an electric vehicle includes a battery pack, a battery frame disposed along the periphery of a battery region in which the battery pack is located to form a closed cross-section, a sill side part fixed while being in contact with at least a portion of the battery frame, a bottom portion covering an open one surface of the battery region formed by the battery frame, and fixing the battery pack located therein, a floor part located on another open surface of the battery frame and covering the same, a cross member disposed at regular intervals on the floor part and fixed thereto, located outside of the battery frame, and formed to extend in a first direction, a width direction of a vehicle, a pillar bracket fixed to the floor part, but located more distantly in the first direction than the position in which the cross member is fixed, a front frame provided on one of side surfaces of the battery frame, the side surfaces being parallel to the first direction, a rear frame provided on the other of the side surfaces of the battery frame, located on the other of the side surfaces parallel to the one of the side surfaces in which the front frame is located, and a pillar part connected to the pillar bracket and extending in a third direction, a height direction of the vehicle.

### Advantageous Effects of Invention

As set forth above, in the present disclosure, through the structure described above, a vehicle body structure having structural rigidity to withstand collisions is secured and the weight is reduced, may be provided.

In the present disclosure, by providing a modularized vehicle body structure, economic benefits may be provided through convenience of management and simplification of parts.

### Brief description of drawings

FIG. 1a is a perspective view of a vehicle body structure of a conventional body-on-frame.
FIG. 1b is a view of a vehicle body structure of a conventional body-on-frame in which a frame and a vehicle body are coupled, when viewed from the bottom to the top.
FIG. 2 is a perspective view of an electric vehicle body structure according to an embodiment of the present disclosure.
FIG. 3 is an exploded view of an electric vehicle body structure according to an embodiment of the present disclosure.
FIG. 4 is a cross-sectional view of portion I-I' of FIG. 2.
FIG. 5 is a perspective view of a battery frame according to an embodiment of the present disclosure.
FIG. 6 is a cross-sectional view of a battery frame according to an embodiment of the present disclosure.
FIG. 7 is a cross-sectional view of a sill side part according to an embodiment of the present disclosure.
FIG. 8 is a cross-sectional view of a cross member according to an embodiment of the present disclosure.
FIG. 9 is a cross-sectional view of a sill side bracket according to an embodiment of the present disclosure.
FIG. 10 is a view illustrating a state in which a vehicle body of an electric vehicle is assembled according to an embodiment of the present disclosure, FIG. 10a is a view illustrating a state in which a pillar part is installed on a pillar bracket, FIG. 10b is a view illustrating a state in which a dash assembly is installed, FIG. 10c is a view illustrating a state in which a side inner assembly is installed, and FIG. 10d is a view illustrating a state in which a side outer assembly is installed.

### Mode for Invention

Hereinafter, specific embodiments of the present disclosure will be described with reference to the attached drawings. However, the spirit of the present disclosure is not limited to the presented embodiments, and other regressive inventions or other embodiments included in the spirit of the present disclosure may be easily suggested by a person skilled in the art who understands the spirit of the present disclosure by adding, changing, or deleting other components within the scope of the same spirit, but it will also be said to be included within the scope of the present disclosure.

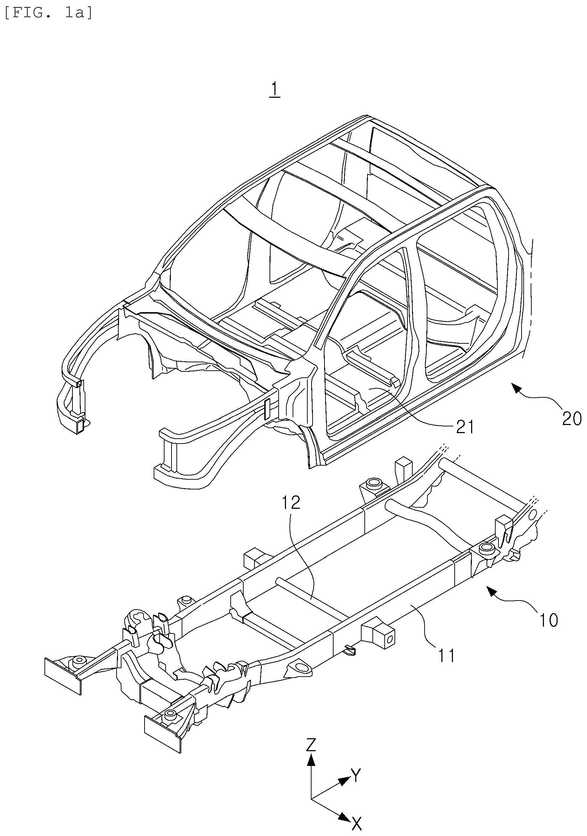

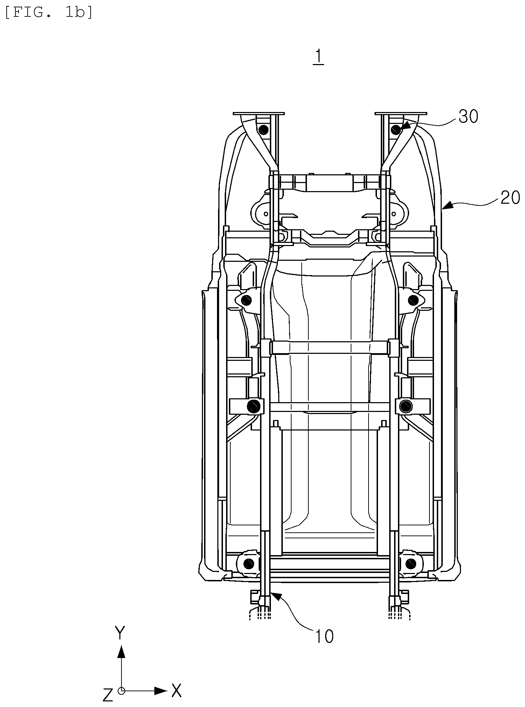

FIG. 1a is a perspective view of a vehicle body structure of a conventional body-on-frame, and FIG. 1b is a view illustrating a state in which a vehicle body structure of a conventional body-on-frame with the frame and the body are coupled when viewed from the bottom to the top.

In a vehicle with a conventional body-on-frame structure, a frame 10 is formed by coupling a longitudinal member 11 formed in a longitudinal direction of a vehicle and a transverse member 12 formed in a width direction of the vehicle, and a body 20 including a lower member 21 corresponding to a floor of a passenger boarding space is formed above the frame 10. The frame 10 and the body 20 may be coupled using a mount bushing 30 to form a conventional vehicle body structure 1.

However, since an electric vehicle should be provided with a battery pack, there should be provided a battery region in which the battery pack is mounted, and to maximize the battery region, there should be provided a region as wide as possible in the width direction of the vehicle, but the structural rigidity should not be weakened as compared to the conventional battery packs, and the weight of the frame itself needs to be reduced due to the weight of the battery pack.

Even in the case of a vehicle structure connected using a mount bushing 30, there is a problem in which a frame is severely bent or twisted in a pillar part side crash and a small overlap crash, which are among the vehicle crash characteristic tests. When the battery pack is mounted as is in the conventional vehicle body structure 1, a problem of stability of the battery will be aggravated due to the bending or twisting, described above.

The present disclosure is to provide an electric vehicle body structure which maximizes a battery region, has good structural rigidity, and reduces the weight. In addition, the present disclosure is to provide an individual frame of a vehicle body that can be used for various vehicle types.

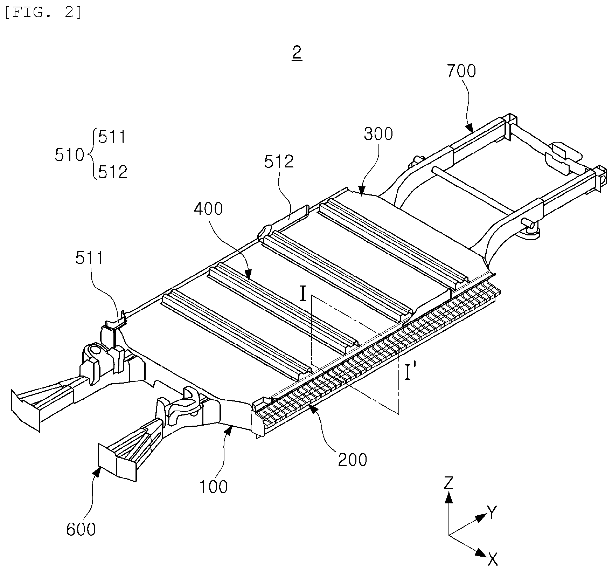

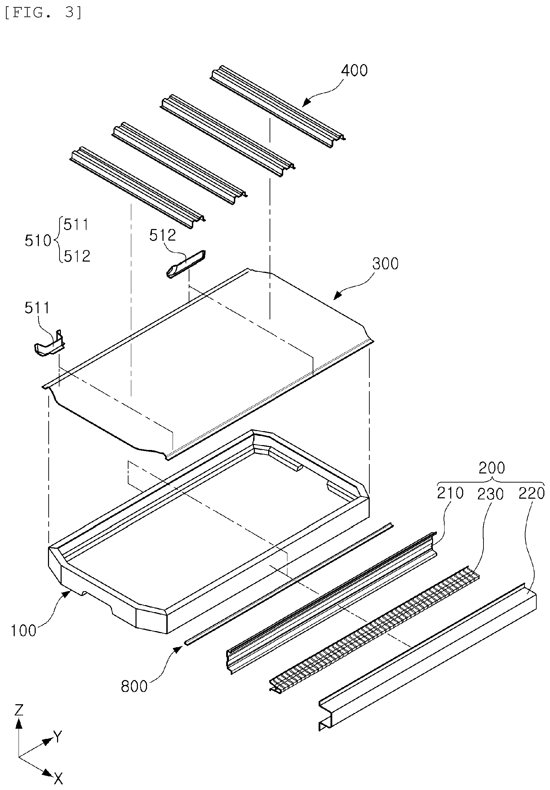

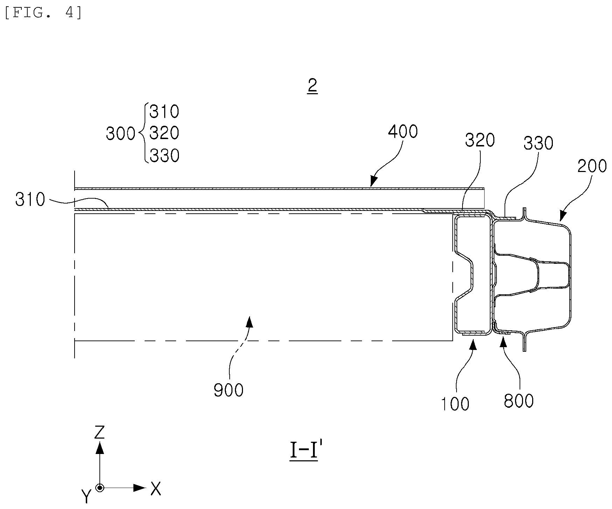

FIG. 2 illustrates a perspective view of an electric vehicle body structure according to an embodiment of the present disclosure, FIG. 3 illustrates a partial exploded view of an electric vehicle body structure according to an embodiment of the present disclosure, and FIG. 4 illustrates a cross-sectional view of a portion indicated as I-I' in the drawing of FIG. 2.

An electric vehicle body structure 2 according to an embodiment of the present disclosure may include a battery unit and a body.

The battery unit includes a battery frame 100, a sill side part 200, a floor part 300, and a cross member 400. The body is disposed on the battery unit to form a space in which passengers can board.

In the present disclosure, a width direction of the vehicle is defined as a first direction. A longitudinal direction of the vehicle is defined as a second direction, and a height direction of the vehicle is defined as a third direction.

A battery accommodation space in which a battery or a battery pack is located is defined as a battery region 900. A battery or a battery pack may be mounted in the battery region 900.

The battery frame 100 may be located along the periphery of the battery region 900. The battery frame 100 may be integrally connected along the periphery of the battery region 900 to form a loop structure.

The battery frame 100 may include a first subframe 111 extending in a first direction, a width direction of the vehicle, and a third subframe 113 extending in a second direction intersecting the first direction and connected to the first subframe 111, and may have a battery region 900, a battery accommodation space, formed therein.

The sill side part 200 may be disposed to abut the battery frame 100 in the first direction, a width direction of the vehicle, and may be formed to extend in the second direction, a longitudinal direction of the vehicle. In addition, since the sill side part 200 is disposed in contact with a side surface of the battery frame 100 and is fixed to abut the battery frame 100, thereby providing an effect increasing structural rigidity.

The floor part 300 is formed to cover an open one surface of the battery frame 100. The floor part 300 may serve as a floor of an interior space in a completed vehicle body structure. The floor part 300 may be coupled to the battery frame 100 and may be disposed on the battery accommodation space.

The cross member 400 may be fixed to the floor part 300, be located outside of the battery region 900, and be formed to extend in the first direction.

Therefore, the cross member 400 may extend in the first direction and be disposed on the floor part.

Since a battery pack should be located in the battery region 900, the cross member 400 may serve to reinforce the floor part 300 in the first direction from the outside of the battery region 900.

According to an embodiment of the present disclosure, a vehicle body structure of the present disclosure may be modularized. The electric vehicle body structure 2 may be modularized by further including a body including a pillar bracket 510 and a pillar part 550, a front frame 600, and a rear frame 700.

The front frame 600 may be located in a second direction based on the battery frame 100. The front frame 600 may be a frame forming a front portion of the vehicle.

The rear frame 700 may be located in a second direction based on the battery frame 100, and may be located in the opposite direction of the front frame 600. The rear frame 700 may be a frame forming a rear portion of the vehicle.

In the conventional vehicle frame 10 (see FIG. 1a), there is a longitudinal member 11 (see FIG. 1a) by connecting one or a plurality of members in the second direction, but in an electric vehicle, there is a battery region 900, so that to maximize the battery region 900, a battery frame 100 may be located. By coupling the front frame 600 and the rear frame 700 to the battery frame 100 with the same length as that in the second direction formed by the longitudinal member 11 (see FIG. 1a), a frame 10 (see FIG. 1a) formed to include the conventional longitudinal member 11 (see FIG. 1a) and a transverse member 12 (see FIG. 1a) may be replaced.

In this case, some structures including the battery frame 100 may be maintained as a single structure or a few structures, and a length of the vehicle may be formed differently by varying the front frame 600 and the rear frame 700 depending on the vehicle type. That is, the effect of increased productivity and reduced costs due to modularization may be provided.

In addition, according to an embodiment of the present disclosure, a pillar bracket 510 and a pillar part 550 may be further provided.

A body may be disposed on the battery unit, and may be formed to surround a passenger boarding region, a space in which passengers can board.

For example, the body may include the pillar part 550, a dash assembly 560, a side inner assembly 570, a side outer assembly 580, and the like. The body may include an upper member supported by the pillar part 550 and closing an upper portion of the passenger boarding region.

In the conventional vehicle body structure, the conventional body 20 includes a configuration including a lower member 21 to close a lower portion of the passenger boarding space, but the body according to an embodiment of the present disclosure does not necessarily have a configuration closing the lower portion of the passenger boarding space because there is a floor part 300 of the battery unit.

The pillar part 550 may be formed to extend in a third direction, a height direction of the vehicle, and form a passenger boarding space. The pillar part 550 is a configuration which was conventionally included in the body 20 (see FIG. 1a), and may be a configuration forming a side wall of the vehicle. The pillar part 550 may be fixedly connected to the pillar bracket 510.

If an entire frame of the vehicle is completed by connecting the body 20 (see FIG. 1a) as it is to the frame 10 (see FIG. 1a) with a mounting bush 10 (see FIG. 1a), according to an embodiment of the present disclosure, it may be manufactured by connecting a bracket including a pillar bracket 510 to a structure including a battery frame 100 and then sequentially connecting another frame, pillar part 550, or assembly.

The pillar bracket 510 has a shape to which the pillar part 550 may be connected or coupled. When an A-pillar part is coupled, the pillar bracket 510 may be an A-pillar bracket 511 that fits the shape, and when a C-pillar part is coupled, the pillar bracket 510 may be a C-pillar bracket 512 that fits the shape. The pillar bracket 510 can be fixedly coupled to a floor part 300. In this case, the coupling between the pillar bracket 510 and the floor part 300 may be strongly performed by welding or mechanical coupling.

Since the pillar bracket 510 and the pillar part 550 are configured, some structures including the battery frame 100 may be maintained to have a single or a few structures, and a height and shape of the vehicle may be formed differently depending on the vehicle type by varying the pillar bracket 510 and the pillar part 550. Therefore, the effect of increased productivity and cost reductions due to modularization may be provided.

Considering the shape of the body, the pillar bracket 510 may be fixed to the floor part 300, the pillar bracket 510 may be located more distantly in the first direction than the position in which the cross member 400 is fixed. An internal space formed by the pillar bracket 510 and the battery frame 100 and a portion of the front frame 600 and the rear frame 700 is a space in which passengers board, so securing as wide a space as possible may increase passenger satisfaction. Therefore, the pillar bracket 510 may be located more distantly in the first direction than the position in which the cross member 400 is fixed, so that the pillar part 550 may be fixed, thereby securing as wide a passenger boarding space as possible.

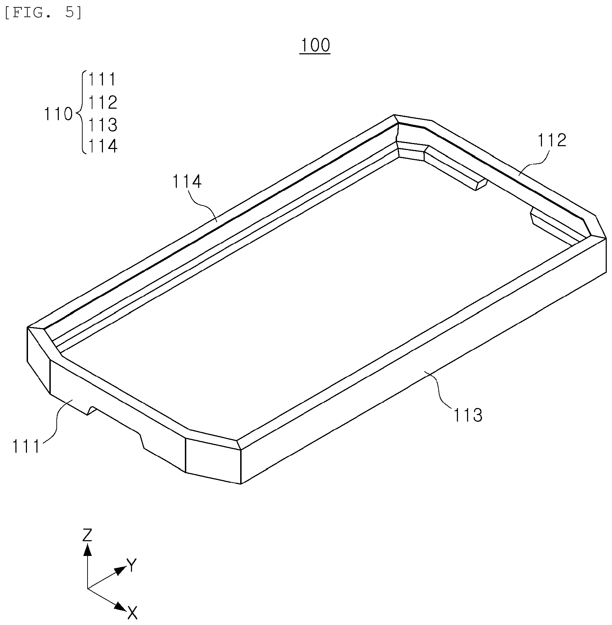

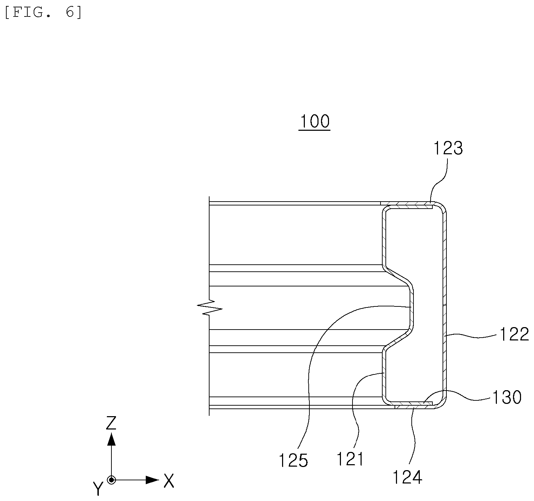

FIG. 5 is a perspective view of a battery frame according to an embodiment of the present disclosure, and FIG. 6 is a cross-sectional view of a battery frame according to an embodiment of the present disclosure.

Depending on the structural characteristics of the vehicle, a length of the battery frame 100 in the first direction may be limited to not exceeding a width of the vehicle. Therefore, the length of the battery frame 100 in the first direction should be set as close as possible to the width of the vehicle, but should not cause a structural collision with other structures of the vehicle.

As an example, the battery frame 100 may comprise a plurality of subframes. The subframe 110 may include a first subframe 111 extending in the first direction, a second subframe 112, at least partially parallel to the first subframe 111, a third subframe 113 extending in the second direction, and a fourth subframe 114, at least partially parallel to the third subframe 113, which may be integrally connected, to form a closed cross-section. Each of the first subframe 111 and the second subframe 112, and each of the third subframe 113 and the fourth subframe 114 may form a symmetrical structure.

A closed cross-section, which is a cross-section viewed in the third direction, may be formed as a cross-section close to a square, but the cross-sectional shape is not limited to a square and may be manufactured in various shapes. A connection portion of the subframe 110 may be formed to be rounded or inclined to be connected smoothly, and improve processability.

In addition, the battery frame 100 may include a first surface 121 formed close to the battery region and having a constant length in a third direction, a height direction of the vehicle, a second surface 122 formed at least partially parallel to the first surface 121 and spaced apart from the first surface 121 by a predetermined distance, a third surface 123 connecting the first surface 121 and the second surface 122, and a fourth surface 124 at least partially parallel to the third surface 123, and may be configured so that a cross-section perpendicular to a longitudinal direction of the first surface 121 to the fourth surface 124 forms a closed cross-section.

Therefore, the first subframe 111 and the second subframe 112 may be closed cross-sections in which cross-sections thereof cut in the second direction are formed of the first surface 121 to the fourth surface 124 as described above. The third subframe 113 and the fourth subframe 114 may be closed cross-sections formed of the first surface 121 to the fourth surface 124 when cut in the first direction.

The shape of the closed cross-section is not a simple polygonal shape, but a groove portion 125, at least a portion thereof is curved or folded, may be formed, and the groove portion 125 may be continuous in the second direction.

When the closed cross-section formed by the first surface 121 to the fourth surface 124 is close to a square cross-section, a groove portion 125 in which at least a portion of the first surface 121 is curved or folded toward the second surface 122, may be formed, and the groove portion 125 may be formed to be continuous in the second direction.

Through the structure of the groove portion 125 described above, the effect of increasing energy absorption capacity due to external force in the first direction may be provided.

The battery frame 100 may be manufactured through a process in which two plate materials are curved and bent and then coupled. In this case, the battery frame 100 may be joined in a joint portion 130 to form a closed cross-section. When manufacturing the battery frame 100 by processing the plate materials as described above, the convenience of processing may be increased.

Alternatively, the battery frame 100 may be integrally formed without a joint portion 130 through extrusion.

Alternatively, the battery frame 100 may be integrally formed with a portion thereof open, forming an open cross-section rather than a closed cross-section.

In addition, since the interior is a hollow closed cross-section, another reinforcing member may be added to the interior to reinforce the strength.

The battery frame 100 of the present disclosure forms a loop structure to provide an effect of forming a battery area 900 (see FIG. 4) as wide as possible in a first direction, a width direction of the vehicle, and since the loop shape is integrally fixed, the rigidity due to twisting is increased.

The interior of each subframe of the battery frame 100 may be formed to be hollow, so that the weight of the vehicle may be reduced.

Hereinafter, the battery frame 100 will be described mainly in the case where the shape is close to a square, but is not limited to a shape having a square cross-section.

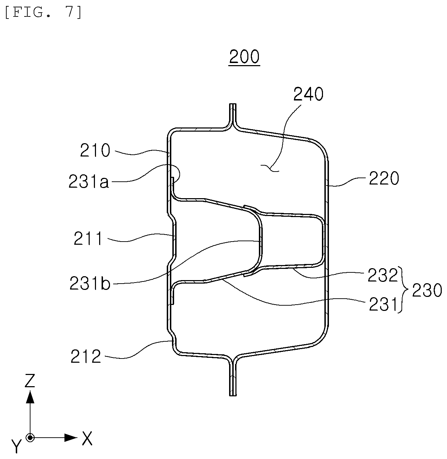

FIG. 7 illustrates a cross-sectional view of a sill side part according to an embodiment of the present disclosure.

The sill side part 200 may include, for example, a first sill side portion 210 and a second sill side portion 220 in contact with the first sill side portion 210 and forming a hollow portion 240 which is continuous with the first sill side portion 210 in the second direction. In this case, at least a portion of the first sill side portion 210 may be fixed in contact with the battery frame 100 (see FIG. 4). In other words, at least a portion of a first portion, which is a surface parallel to the third direction of the first sill side portion 210, may be fixed to abut the second surface 122 (see FIG. 6) of the battery frame 100 (see FIG. 4).

The first sill side portion 210 may be a sill side part 200 located closest to the battery region 900 (see FIG. 4).

For example, the first sill side portion 210 may be located to abut the third subframe 113 (see FIG. 5) and the fourth subframe 114 (see FIG. 5), and may be formed continuously in the second direction. The first sill side portion 210 may have a shape in which a cross-sectional shape thereof is continuous in the second direction and a plate material is curved or folded several times to be bent toward the battery region 900 (see FIG. 4). A first sill side portion flange parallel to a third direction may be formed at both ends in the third direction.

The second sill side portion 220 may have a shape symmetrical to the first sill side portion 210, and may have a shape which is not symmetrical and is simply curved or folded toward the outside of the vehicle opposite the battery region 900 (see FIG. 4). A second sill side portion flange parallel to a third direction at both ends, similar to the first sill side portion 210, may be formed in a second sill side portion 220, and the first sill side portion flange and the second sill side portion flange may be in contact with each other and then fixed.

However, the first sill side portion flange and the second sill side portion flange may not be parallel to a third direction, and may have a certain angle, and even in this case, the first side flange and the second side flange may abut. That is, even if the first sill side portion flange and the second sill side portion flange are not parallel to the third direction, the first sill side portion flange and the second sill side portion flange may be formed to be in contact and fixed.

When the first sill side portion 210 and the second sill side portion 220 are fixed to abut and integrally formed, a cross-section thereof viewed from a second direction may be a closed cross-section, and a hollow portion 240 may be formed in the second direction.

A sill side reinforcing portion 230 which helps absorb impacts from the outside of the vehicle may be further included in the hollow portion 240.

The sill side reinforcing portion 230 may be located between the first sill side portion 210 and the second sill side portion 220, and may have a fixed portion 231a fixed to abut the first sill side portion 210 formed and a curved portion 231b which is curved toward the second sill side portion 220, and may absorb impacts in the first direction. The sill side reinforcing portion 230 may be formed of a plurality of reinforcing members, rather than a single reinforcing member.

For example, the sill side reinforcing portion 230 may include a first reinforcing member 231 fixed to the first sill side portion 210, and curved toward the second sill side portion 220, and a second reinforcing member 232 which is fitted and coupled to the first reinforcing member 231, and has a narrower width in the third direction than the first reinforcing member 231. The second reinforcing member 232 may also have a curved shape in the first direction, and may be curved toward the second sill side portion 220. The second reinforcing member 232 may be in contact with the second sill side portion 220, and may be located at a predetermined distance. When the second reinforcing member 232 is in contact with the second sill side portion 220, an effect of directly transmitting and absorbing an external force in the first direction may be provided, and when the second reinforcing member 232 is located at a predetermined distance, an effect according to manufacturing convenience may be provided.

The first reinforcing member 231 and the second reinforcing member 232 may have an unevenness portion (not shown) which has a valley and a crest parallel to the first direction and is shaped and coupled to each other formed. The valley and crest of the unevenness portion may have a predetermined angle with the first direction, but may not be parallel to the second direction. The sill side reinforcing portion 230 may be formed to be long in the second direction with the shape described above repeated or continuous. In this case, the first sill side portion 210 or the second sill side portion 220 of the sill side part 200 may be continuous in the second direction with a length equal to or shorter than that of the first sill side portion 210 or the second sill side portion 220.

According to an embodiment of the present disclosure, since at least a portion of the sill side part 200 is fixed in contact with the battery frame 100 (see FIG. 4), when a side collision occurs, the collision is transmitted to the battery frame 100 (see FIG. 4), and the battery frame 100 (see FIG. 4) has a loop shape, so that an effect of distributing collisions in all connected directions. In addition, it can be effective in a side collision because it can be primarily absorbed by a sill side reinforcing material located inside the sill side part 200.

The first sill side portion 210 may have an inlet groove 211 which is introduced in the second direction formed. A coupling shape 212 may be formed in consideration of the case in which the sill side part 200 is coupled to the battery frame 100 (see FIG. 4) through a sill side bracket 800 (see FIG. 4) described below.

However, the shape is not limited to the shape described above and may be variously changed depending on the design.

Referring to FIG. 4, the floor part 300 may be formed to include a horizontal portion of a closed cross-section formed by the first subframe 111 (see FIG. 5) to the fourth subframe 114 (see FIG. 5) to cover an open one surface of the battery frame 100. The floor part 300 may be formed in a plate shape. In addition, the floor part 300 may further include a flange 330 formed to protrude from the battery frame 100 in the first direction or the second direction, and at least a portion of the sill side part 200 may abut the flange 330.

In the conventional vehicle body structure 1 (see FIG. 1a), a substructure 21 (see FIG. 1a), a structure corresponding to the floor part 300 is attached to the body 20 (see FIG. 1a), and is not attached to the frame 10 (see FIG. 1a). Therefore, when connected by a mount bushing 30 (see FIG. 1b), it deforms separately from the frame 10 (see FIG. 1a), and it was difficult to reinforce the frame 10 (see FIG. 1a) in a collision including a side collision.

However, according to an embodiment of the present disclosure, since the floor part 300 is fixed to an open one surface of the battery frame 100, an effect of adding rigidity to prevent deformation of the battery frame itself upon impact may be provided.

The battery frame 100 and the floor part 300 may be strongly coupled mechanical coupling or welding. As for the mechanical coupling, a hole for coupling may be formed in each of the battery frame 100 and the floor part 300, and it may be a fixed coupling using a pin or a nut and bolt penetrating the coupling hole.

For example, the floor part 300 may be formed to include a first step 310 formed to be parallel at a predetermined interval in a third direction, a height direction of the vehicle, and a second step 320 continuous from the first step 310, but having a different height in the third direction.

The floor part 300 may be fixed to the battery frame 100 at the second step 320. Specifically, the second step 320 may be welded to a third surface 123 (see FIG. 6) of the battery frame 100, or may be mechanically coupled to a first coupling hole formed at the second step 320 and a second coupling hole formed on the third surface 123 (see FIG. 6) with a pin or a nut and bolt. The welding may be spot welding. The coupling may not be one, but may be formed continuously at a certain interval along the third surface 123 (see FIG. 6) of the battery frame 100. A role of assisting the rigidity of the battery frame 100 may be provided without being easily separated with the coupling.

In addition, the first step 310 and the second step 320 may be formed with different heights in the third direction, which may help to discharge heat generated in the battery externally.

The floor part 300 may further have a flange 330 formed thereon. The flange 330 may be formed to protrude from the battery frame 100 in the first direction or the second direction. For example, the flange 330 may be formed to extend from the second step 320, and protrude from the battery frame 100.

At least a portion of the sill side part 200 may abut the flange 330 of the floor part 300. A portion of the first sill side portion 210 may be coupled to the flange 330. The portion of the first sill side portion 210 to be coupled may be one surface of curved portions multiple times.

As another example, the flange 330 of the floor part 300 may be formed to extend at a predetermined angle and not parallel to the second direction. Even in this case, the flange 330 of the floor part 300 may abut a portion of the first sill side portion 210. Alternatively, in this case, the portion which abuts the flange 330 of the floor part 300 may be a first side sill flange which is not parallel to the third direction and has an angle.

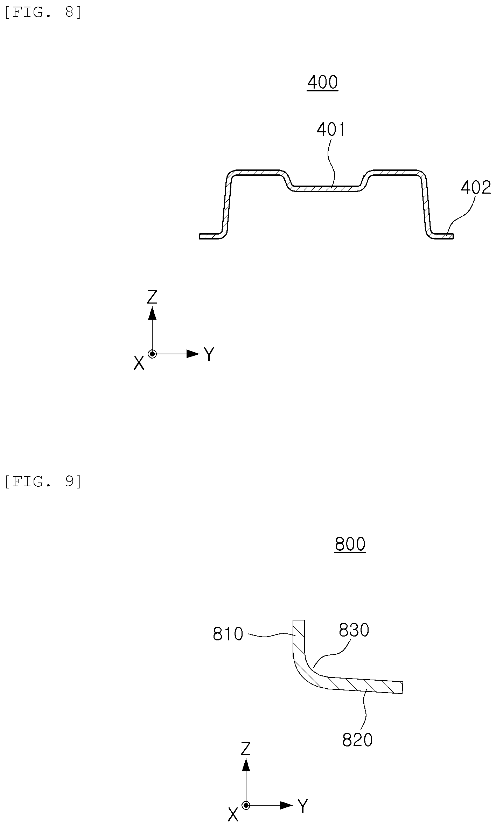

FIG. 8 illustrates a cross-sectional view of a cross member according to an embodiment of the present disclosure.

A cross-section of a cross member 400 viewed from a first direction may have a '⊏' shape with a lower portion open, and may have a shape of a square with all sides closed. In addition, in order to add rigidity in the first direction, a wrinkled or curved portion may be included on a surface formed parallel to a floor part 300 (see FIG. 2). For example, a cross groove 401, which is a groove which is introduced inwardly, may be further formed on the highest surface in a third direction.

The cross member 400 may be strongly coupled to the floor part 300 (see FIG. 2) by mechanical coupling. The cross member 400 and the floor part 300 (see FIG. 2) may abut with each other face to face and then coupled by welding, or the like. That is, when the cross member 400 has an open ' 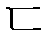 ' shape with a surface fixed to the floor part 300 (see FIG. 2), a cross member flange 402 in contact with the floor part 300 (see FIG. 2) may be formed on the cross member 400, and a surface of the cross member 400 and a surface of the floor part 300 (see FIG. 2) may be in contact through the cross member flange 402 and coupled.

Since the cross member 400 is formed as described above and the cross member 400 is not located in a battery region 900 (see FIG. 4), the battery region 900 (see FIG. 4) may be maximized and rigidity according to an external force in the first direction may be reinforced.

A plurality of cross members 400 may be provided. In this case, the cross members 400 may be fixed to the floor part 300 (see FIG. 2), be continuous in the first direction, and be disposed at regular intervals in the second direction. However, an embodiment thereof is not limited to the regular interval described above, and may be set differently depending on the design.

FIG. 9 illustrates a cross-sectional view of a sill side bracket according to an embodiment of the present disclosure.

According to an embodiment of the present disclosure, a sill side bracket 800 may be included. The sill side bracket 800 may be located on one side of the battery frame 100 (see FIG. 4), and the sill side bracket 800 and the sill side part 200 (see FIG. 4) may be fixed. The sill side bracket 800 may play a role in fixing the sill side part 200 (see FIG. 4) that can be in contact with the battery frame 100 (see FIG. 4).

For example, the sill side bracket 800 may be located between the third subframe 113 (see FIG. 5) and the fourth subframe 114 (see FIG. 5) of the battery frame 100 (see FIG. 4) and the sill side part 200 (see FIG. 4). At least a portion of the sill side part 200 (see FIG. 4) of the sill side bracket 800 may support in the third direction.

The sill side bracket 800 may extend in a second direction like, the sill side part 200 (see FIG. 4), and a cross-section of the sill side bracket 800 viewed from the second direction may be provided with a first flat portion 810 formed with a surface parallel to be in close contact with one of the subframes 110 (see FIG. 5) of the battery frame 100 (see FIG. 4) and a second flat portion 820 having a bent portion to support the first sill side portion 210 (see FIG. 4) therefrom. The first flat portion 810 may be a surface at least partially contacting the second surface 122 (see FIG. 6). The second flat portion 820 may extend from the first flat portion 810, and support the first sill side portion 210 (see FIG. 4) in a third direction. A curved portion 830 may be formed between the first flat portion 810 and the second flat portion 820.

When viewed in order from the battery region 900 (see FIG. 4), the subframe 110 (see FIG. 5) of the battery frame 100 (see FIG. 4), the first flat portion 810 of the sill side bracket 800, and the first sill side portion 210 (see FIG. 4) are located. The components described above may be located in order, so they may be welded to respectively contacting surfaces, or a second coupling hole penetrating through the subframe 110 (see FIG. 5), the first flat portion 810, and the first sill side portion 210 (see FIG. 4) may be formed and may be integrally fixed with a pin or a bolt and nut.

In addition, a second flat portion 820 of the sill side bracket 800 is formed by being bent from the first flat portion 810 to support the first sill side portion 210 (see FIG. 4) in a third direction. In addition, the second flat portion 820 and the first sill side portion 210 (see FIG. 4) may also be coupled in contact with each other. The second flat portion 820 and the sill side 210 (see FIG. 4) may not be fixed in the contact state. However, when the second flat portion 820 and the first sill side portion 210 (see FIG. 4) may be fixed, and when they are fixed, a third coupling hole penetrating through the first sill side portion 210 (see FIG. 4) and the second flat portion 820 may be formed and may be integrally fixed with a pin or a bolt and nut.

For example, the sill side bracket 800 may not be formed long in the second direction, but may be formed short. That is, the first flat portion 810 and the second flat portion 820 may be formed, but may not be continuous in the second direction, and may be formed short. In this case, a plurality of sill side brackets 800 may be fixed to be stably fixed.

By providing the sill side bracket 800, the sill side part 200 (see FIG. 4) and the battery frame 100 (see FIG. 4) may be stably fixed, thereby providing an effect of improving rigidity from external force in the first direction. In addition, the battery frame 100 (see FIG. 4) and the sill side part 200 (see FIG. 4) may be modularized, thereby providing an effect of manufacturing various vehicle bodies in an assembly manner.

Referring to FIG. 4, according to an embodiment of the present disclosure, a bottom portion (not shown) covering one surface of the battery region 900 of the battery frame 100, and fixing the battery pack may be further included.

The bottom portion may cover the remaining region of the battery region 900, not covered by the floor part 300, and may fix a battery pack located therein.

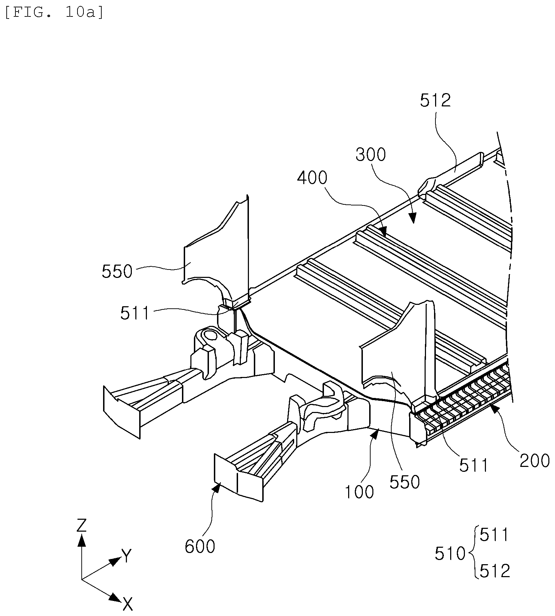

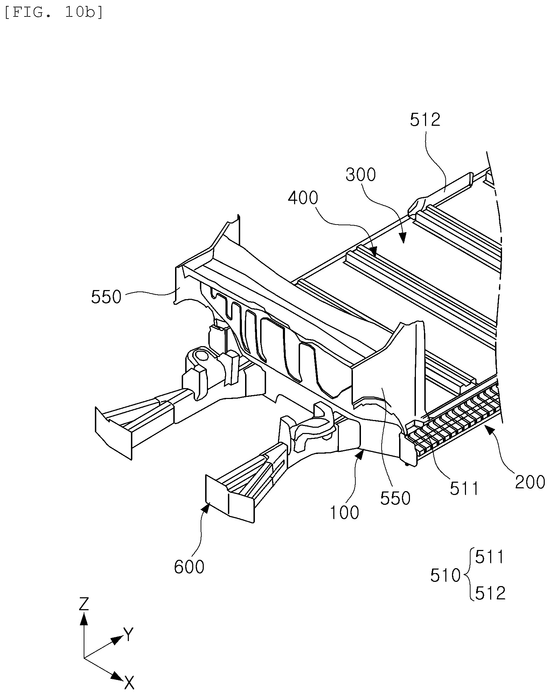

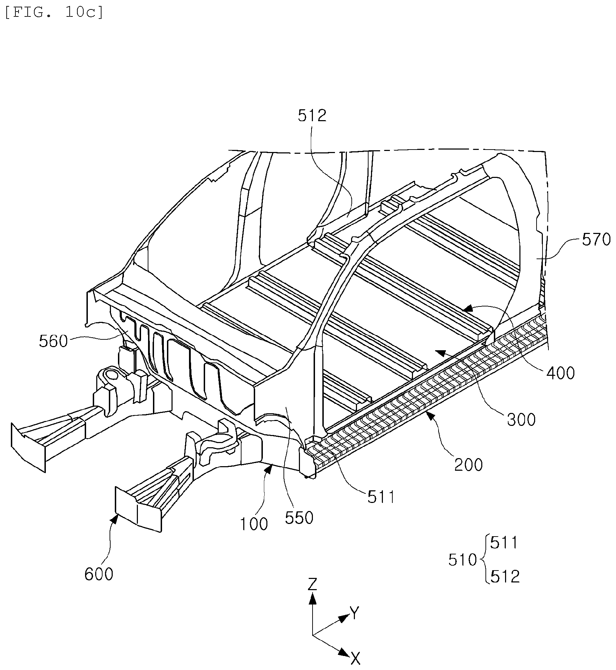

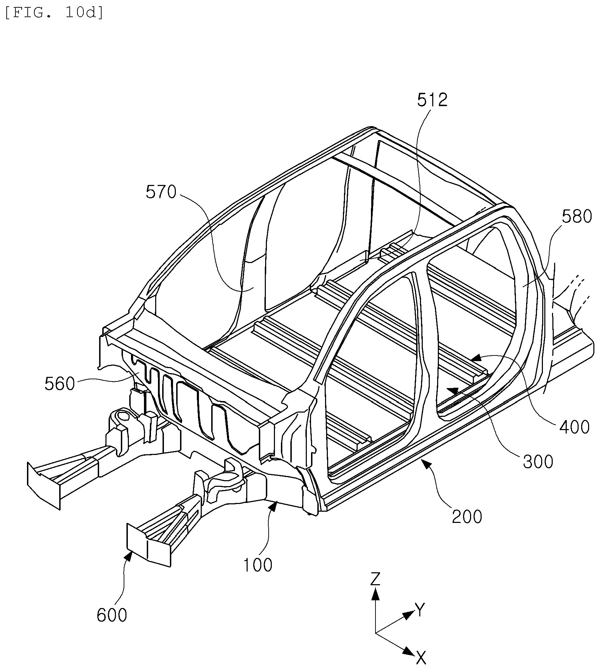

FIG. 10 illustrates a state in which an electric vehicle body according to an embodiment of the present disclosure is assembled, FIG. 10a illustrates a state in which a pillar part is installed in a pillar bracket, FIG. 10b illustrates a state in which a dash assembly is installed, FIG. 10c illustrates a state in which a side inner assembly is installed, and FIG. 10d illustrates a state in which a side outer assembly is installed.

An electric vehicle body structure 2 according to an embodiment of the present disclosure may further include a dash assembly 560 to be located between a plurality of pillar brackets 510. The plurality of pillar brackets 510 may be the same bracket. For example, an A pillar bracket 511 may be installed parallel to one end of the battery frame 100 in a second direction, and a dash assembly 560 may be fixed therebetween. The dash assembly 560 may be coupled to a flange 330 (see FIG. 4) formed in a second direction of the floor part 300. In this case, the two may be strongly coupled through coupling by welding.

The electric vehicle body structure 2 according to an embodiment of the present disclosure may further include a side inner assembly 570 including a first sill side portion 210, which may be fixed to the pillar bracket 510 and may be fixed at both ends in a first direction of the battery frame 100.

According to an embodiment of the present disclosure, the electric vehicle body structure 2 may have a side outer assembly 580 coupled to the side inner assembly 570 at both ends in a first direction. The side outer assembly 580 may include a second sill side portion 220.

The side inner assembly 570 and side outer assembly 580 may be sequentially coupled to a subframe having an axis in the first direction of the sill side part 200 through welding. Therefore, a coupling member such as a conventional mount bushing 30 is not required.

Conventionally, a vehicle structure was manufactured by coupling a frame 10 (see FIG. 1a) and a body 20 (see FIG. 1a), corresponding to the vehicle type. However, in the present disclosure, the vehicle structure may be manufactured by welding or mechanically coupling individual frames to a pillar part 550, a sill side part 200, and other vehicle structures through individual brackets based on modularized individual frames. Therefore, it can provide economic and management effects of cost reduction and management convenience through modularization, while also providing functional effects of internal structural optimization and collision rigidity reinforcement.

In the conventional vehicle structure, a lower member 21 (see FIG. 1a) corresponding to a lower portion of an internal space of the vehicle structure is included in the body 20 (see FIG. 1a), but in the present disclosure, since there is a floor part 300 coupled to the battery frame 100 in a third direction, separately therefrom, the lower member 21 (see FIG. 1a) for the lower portion of the internal space may not be included. Therefore, since there may be no portion in which coupling between wide areas is performed, welding may be performed simply and quickly by spot welding, and mechanical coupling such as bolting, may also be performed.

Hereinafter, in an electric vehicle body structure according to another embodiment of the present disclosure, a portion described in the electric vehicle body structure mentioned above will be cited.

According to another embodiment of the present disclosure, an electric vehicle body structure may include a battery unit, on a plane defined by a first direction and a second direction intersecting each other, including a battery frame 100 defining a battery region 900, an internal space, in which a battery is located therein, a battery pack accommodated in the internal space, a floor part 300 coupled to the battery frame 100, and disposed on the battery pack, and a pillar bracket 510 installed on the floor part 300, and a body disposed on the battery unit, and coupled to the battery unit through the pillar bracket 510.

Unlike the conventional vehicle body structure which was coupled thereto by a mount bushing, the body according to an embodiment of the present disclosure may be coupled to the battery unit by a pillar bracket, thereby providing an effect of increasing structural rigidity while maximizing the region in which the battery is located.

Hereinafter, in the case of an electric vehicle, a portion described in the electric vehicle body structure 2 described above is cited from the corresponding description.

According to an embodiment of the present disclosure, an electric vehicle may include a battery pack and a battery frame 100 disposed along the periphery of a battery region 900, in which the battery pack is located, to form a closed cross-section, a side sill portion 200 fixed while being in contact with at least a portion of the battery frame 100, a bottom portion covering an open one surface of the battery region 900 formed by the battery frame 100, and fixing the battery pack located therein, and a floor part 300 located on another open surface of the battery frame and covering the same, a cross member 400 disposed at regular intervals on the floor part 300 and fixed thereto, located outside of the battery frame 100, and formed to extend in a first direction, a width direction of the vehicle, a pillar bracket 510 fixed to the floor part 300, but located more distantly in the first direction than the position in which the cross member is fixed, a front frame 600 provided on at least one of side surfaces of the battery frame 100, the side surface being parallel to the first direction, a rear frame 700 provided on the other side surface of the battery frame 100, but located on a surface parallel to the side surface in which the front frame 600 is located, and a pillar part 550 connected to the pillar bracket 510 and extending in a third direction, a height direction of the vehicle.

The electric vehicle as described above may provide an effect of minimizing distortion and deformation of the battery frame 100 since the battery region 900 is maximized in the first direction, and the rigidity is good and adsorption capacity is efficient against external force in the first direction. In addition, the vehicle may be modularized, which facilitates the convenience of manufacturing and parts storage, and can provide an economically efficient effect.

In addition, a vehicle body structure may be formed of a steel material with good relative rigidity, and may provide the advantage that can reduce the weight while having similar rigidity to that of conventional materials.

While example embodiments have been illustrated and described above, it will be apparent to those skilled in the art that modifications and variations could be made without departing from the scope of the present disclosure as defined by the appended claims.

### Description of Reference Numerals

1: Conventional Vehicle Body Structure 2: Electric Vehicle Body Structure
10: Frame 11: Longitudinal Member
12: Transverse Member 20: Body
21: Lower Member 30: Mount Bushing
100: Battery Frame 110: Subframe
111: First Subframe 112: Second Subframe
113: Third Subframe 114: Fourth Subframe
121: First Surface 122: Second Surface
123: Third Surface 124: Fourth Surface
125: Groove Portion 130: Joint Portion
200: Sill side part 210: First sill side portion
211: Inlet Groove 212: Coupling Shape
220: Second sill side portion 230: Sill Side Reinforcing Portion
231: First Reinforcing Member 231a: Fixed Portion
231b: Curved Portion 232: Second Reinforcing Member
240: Hollow Portion 300: Floor part
310: First step 320: Second step
330: Flange 400: Cross Member
401: Cross Groove 402: Cross Member Flange
510: Pillar bracket 511: A Pillar bracket
512: C Pillar bracket 550: Pillar part
560: Dash Assembly 570: Side Inner Assembly
600: Front Frame 700: Rear Frame
800: Sill Side Bracket 810: First Flat Portion
820: Second Flat Portion 830: Folded Portion
900: Battery Region

## Claims

1. An electric vehicle body structure, comprising:
a battery unit including a battery frame including a first subframe extending in a first direction, a width direction of a vehicle, and a third subframe extending in a second direction crossing the first direction and connected to the first subframe, and having a battery region, a battery accommodation space, formed therein, a floor part coupled to the battery frame and disposed on the battery accommodation space, and a cross member extending in the first direction and disposed on the floor part; and
a body disposed on the battery unit.

2. An electric vehicle body structure, comprising:
a battery frame having a battery region, in which a battery is mounted, defined, and located along the periphery of the battery region; and
a sill side part disposed to abut the battery frame in a first direction, a width direction of a vehicle, and formed to extend in a second direction, a longitudinal direction of the vehicle.

3. The electric vehicle body structure of claim 2, wherein the battery frame is formed by coupling a plurality of subframes,
wherein the subframes include a first subframe extending in the first direction, a second subframe at least partially parallel to the first subframe, a third subframe extending in the second direction, and a fourth subframe at least partially parallel to the third subframe, which are integrally connected to form a closed cross-section, and further includes,
a floor part covering an open one surface of the battery frame.

4. The electric vehicle body structure of claim 3, wherein the floor part further includes a flange formed to protrude from the battery frame in the first direction or the second direction, and
at least a portion of the sill side part abuts the flange.

5. The electric vehicle body structure of claim 3, further comprising:
a cross member fixed to the floor part, located outside of the battery region, and formed to extend in the first direction.

6. The electric vehicle body structure of claim 2, wherein the battery frame comprises
a first surface formed close to the battery region and having a constant length in a third direction, a height direction of the vehicle;
a second surface formed parallel to the first surface and spaced apart from the first surface by a predetermined distance;
a third surface connecting the first surface and the second surface; and
a fourth surface parallel to the third surface,
wherein a cross-section perpendicular to a longitudinal direction of the first surface to the fourth surface forms a closed cross-section.

7. The electric vehicle body structure of claim 6, wherein a groove portion in which at least a portion of the first surface is curved or folded toward the second surface, is formed, and the groove portion is continuous in the second direction.

8. The electric vehicle body structure of claim 2, wherein the sill side part comprises
a first sill side portion and
a second sill side portion in contact with the first sill side portion and forming a hollow portion continuous in the second direction together with the first sill side portion, and
at least a portion of the first sill side portion is fixed in contact with the battery frame.

9. The electric vehicle body structure of claim 6, wherein the sill side part comprises
a first sill side portion, and
a second sill side portion in contact with the first sill side portion and forming a hollow portion continuous in the second direction together with the first sill side portion, and
at least a portion of a first portion, a surface parallel to the third direction of the first sill side portion, is fixed to abut the second surface.

10. The electric vehicle body structure of claim 4, wherein the floor part comprises
a first step formed to be parallel at a predetermined interval in a third direction, a height direction of the vehicle, in the battery region; and
a second step continuous from the first step but having a different height in the third direction,
wherein the flange is formed to extend from the second step, and is fixed to the battery frame at the second step.

11. The electric vehicle body structure of claim 10, wherein the battery frame includes a third surface fixed to the second step of the floor part,
the second step and the third surface are welded, or mechanically coupled to a first coupling hole formed at the second step and a second coupling hole formed on the third surface with a pin or nut and bolt.

12. The electric vehicle body structure of claim 6, wherein a sill side bracket is located on one side of the battery frame, and
the sill side bracket and the sill side part are fixed.

13. The electric vehicle body structure of claim 12, wherein the sill side bracket includes a first flat portion, a surface at least partially contacting the second surface, and a second flat portion extending from the first flat portion, and supporting the sill side part in the third direction.

14. The electric vehicle body structure of claim 8, wherein a sill side reinforcing portion located between the first sill side portion and the second sill side portion includes a portion fixed to abut the first sill side portion and curved toward the second sill side portion, and
absorbs an impact in the first direction.

15. The electric vehicle body structure of claim 2, wherein a front frame or a rear frame extending in the second direction is welded to one surface of the battery frame.

16. The electric vehicle body structure of claim 3, wherein a pillar bracket connecting a pillar part located in a third direction, a height direction of the vehicle, is fixed to a portion of the floor part by mechanical coupling.

17. The electric vehicle body structure of claim 16, wherein the pillar bracket is provided in plural, and
a dash assembly located between the pillar brackets is further included.

18. An electric vehicle body structure, comprising:
a battery frame having a battery region, in which a battery is located, defined, formed to surround the battery region, and including a first subframe extending in a first direction, a width direction of a vehicle, a second subframe at least partially parallel to the first subframe, a third subframe extending in a second direction, a longitudinal direction of the vehicle, and a fourth subframe at least partially parallel to the third subframe;
a sill side part including a first sill side portion located to abut the third subframe or the fourth subframe, and formed continuously in the second direction, and a second sill side portion in contact with the first sill side portion and having a hollow portion formed therein while being coupled to the first sill side portion;
a floor part covering an open one surface of the battery frame, at least a portion of which is in contact with the sill side part, the floor part including a first step formed to be in parallel at a predetermined interval in a third direction, a height direction of the vehicle, in the battery region, a second step continuous from the first step, and having a different height in the third direction, and a flange formed to protrude from the battery frame in the first direction, wherein the flange is formed to extend from the second step, and is fixed to the battery frame at the second step;
a plurality of cross members fixed to the floor part, continuous in the first direction, and disposed at regular intervals in the second direction; and
a sill side reinforcing portion located in the hollow portion formed by the first sill side portion and the second sill side portion, and including a first reinforcing member fixed to the first sill side portion, and curved toward the second sill side portion, and a second reinforcing member fitted and coupled to the first reinforcing member and formed with a narrower width in the third direction than the first reinforcing member, and continuous in the second direction.

19. The electric vehicle body structure of claim 18, wherein a pillar bracket fixed to the floor part is further provided, and
wherein the pillar bracket is connected to a pillar part extending in the third direction and forming a passenger boarding space.

20. The electric vehicle body structure of claim 18, wherein a sill side bracket located between the third subframe and the fourth subframe of the battery frame and the sill side part is provided, and
at least a portion of the sill side bracket supports the sill side part in the third direction.

21. An electric vehicle body structure, comprising:
a battery unit, on a plane defined by a first direction and a second direction intersecting each other, including a battery frame defining an internal space, a battery pack accommodated in the internal space, a floor part coupled to the battery frame, and disposed on the battery pack, and a pillar bracket installed on the floor part, and
a body disposed on the battery unit, and coupled to the battery unit through the pillar bracket.

22. An electric vehicle, comprising:
a battery pack;
a battery frame disposed along the periphery of a battery region, in which the battery pack is located, to form a closed cross-section;
a sill side part fixed while being in contact with at least a portion of the battery frame;
a bottom portion covering an open one surface of the battery region formed by the battery frame, and fixing the battery pack located therein;
a floor part located on another open surface of the battery frame and covering the same;
a cross member disposed on the floor part at regular intervals and fixed thereto, located outside of the battery frame, and formed to extend in a first direction, a width direction of a vehicle;
a pillar bracket fixed to the floor part, but located more distantly in the first direction than the position in which the cross member is fixed;
a front frame provided on one of side surfaces of the battery frame, the side surfaces being parallel to the first direction;
a rear frame provided on the other of the side surfaces of the battery frame, located on the other of the side surfaces parallel to the one of the side surfaces in which the front frame is located; and
a pillar part connected to the pillar bracket and extending in a third direction, a height direction of the vehicle.
